# EUROPEAN PATENT SPECIFICATION

(11) **EP 3 429 438 B1**
(45) Date of publication and mention of the grant of the patent: **07.09.2022**
(21) Application number: 17719334.9
(22) Date of filing: 17.03.2017
(51) Int. Cl.: A47J 31/06, A47J 31/36

(54) **DOUBLE-WALLED FILTER FOR COFFEE MACHINE**
DOPPELWANDIGER FILTER FÜR KAFFEEMASCHINE
FILTRE À DOUBLE PAROI POUR MACHINE À CAFÉ

(30) Priority: 17.03.2016 IT UA20161785
(43) Date of publication of application: 23.01.2019
(73) Proprietor: De'Longhi Appliances S.r.l., 31100 Treviso (IT)
(72) Inventor: DE`LONGHI, Giuseppe, 31100 Treviso (IT); SCIAN, Luciano, 31100 Treviso (IT); POGGIOLI, Massimo, 31100 Treviso (IT)
(74) Representative: Hoffmann Eitle
(86) International application number: PCT/IB2017/051559
(87) International publication number: WO 2017/158564

(56) References cited:
- EP-A1- 0 861 679
- WO-A2-2007/080258
- DE-A1- 19 620 381
- DE-U- 7 435 607
- FR-A1- 2 417 963

## Description

The present invention concerns a filter for a coffee machine, particularly espresso coffee. In particular, the present invention can be applied in the so-called double-walled filters.

In fact, filters are known comprising a cup-shaped body having a bottom wall and a substantially cylindrical lateral wall connected to the bottom wall. A compartment is defined in the cup-shaped body for the coffee powder.

The filter is adapted to be inserted in a filter holder that is coupled to the coffee machine for making the beverage.

Within the scope of the present description, it is to be considered that the filter holder comprises a main body in which a compartment is defined for housing the filter containing the coffee powder in a stationary and stable way. The filter holder further comprises a handle connected to the main body, which allows the assembly of the filter holder on the espresso coffee machine for preparing the beverage.

A dispensing hole is provided in the bottom wall for the infused coffee to exit. A filtering wall is arranged within the cup-shaped body compartment. The filtering wall is substantially flat and has a multitude of through holes that allow the infused coffee to pass and retain the coffee powder in the compartment.

Filters are known in which the filtering wall is unremovably fixed to the cup-shaped body. This can determine a rapid decline in the functionality of the filter as impurities and encrustations can form in the gap between the bottom wall and the filtering wall, gradually reducing the functionality of the filter. Furthermore, such encrustations frequently also affect the dispensing hole which, when clogged, totally prevents the exit of coffee. Examples of the prior art can be found in documents DE 74 35 607 U and FR 2 417 963 A1.

To prevent this phenomenon, in other embodiments, the filtering wall is removably coupled to the cup-shaped body so as to be able to remove it and to be able to clean the gap and the dispensing hole.

A seal may be placed between the filtering wall and the cup-shaped body to prevent the coffee powder passing into the gap and through the exit hole.

Disadvantageously, filters of the known type are complex to construct, in fact comprising a high number of elements that are to be disassembled one by one to be able to proceed with suitable cleaning. Furthermore, in that case, the frequent disassembly and reassembly of the elements of known filters can determine rapid wear of the components themselves which hence lose functionality.

An object of the present invention is to propose a filter for a coffee machine the avoids the described drawback. In particular, it is an object of the present invention to propose a filter for a coffee machine distinguished by extreme construction simplicity, as well as being very easy to clean. The object of the present invention is reached by a filter for coffee machines comprising the characteristics of one or more of the appended claims.

A filter for a coffee machine in accordance with the present invention comprises a first portion having a cup-shaped body, for containing coffee powder, having at least one bottom wall having an acceleration hole for the dispensing of coffee and a second portion comprising a filtering wall placed in the cup-shaped body upstream of the acceleration hole and removably associated with the cup-shaped body and a seal placed between an edge of the filtering wall and the cup-shaped body; the seal being coupled unremovably to the filtering wall. The filter exclusively comprises the first and the second portion.

This solution allows the construction of the filter to be made extremely simple since it only comprises two pieces. Furthermore, this characteristic also allows its cleaning to be made very simple since the filter in accordance with this solution can be disassembled with great simplicity for being able to access the gap formed between the bottom wall of the cup-shaped body and the filtering wall, as well as the acceleration hole, without hesitation. It is hence possible to proceed with cleaning the two disassembled elements of the filter simply and quickly, providing advantages not only in the domestic environment but also the professional environment where cleaning often needs to be performed quickly.

It is to be noted that the term "acceleration hole" means a hole with dimensions such as to allow a notable acceleration of the beverage flow exiting the filter through the hole itself. Such acceleration imparted on the flow of the beverage generates a notable increase in the turbulence induced in the flow and, therefore, increased mixing of air in the beverage with a consequent formation of coffee cream or froth.

According to a further aspect of the invention, the cup-shaped body is made in a single piece. Preferably, the cup-shaped body is made through moulding a single metal plate. This allows quick and simple construction of the cup-shaped body which therefore made of a single piece.

In accordance with a secondary aspect of the present invention, the seal is associated with the filtering wall through the overinjection of elastomeric material. Preferably, the elastomeric material is based on food grade silicone. This characteristic allows a stable and long-lasting association of the seal to the filtering wall to be made at the same time as the actual creation of the seal. Hence, this allows a notable time saving in the creation of the seal. It is to be noted that, alternatively, the seal may be fixed to the filtering wall, still unremovably, through the use of suitable adhesive substances. Naturally, in this case, it is imperative for such substances to be completely non-toxic. Alternatively, the seal may be fixed to the filtering wall, still unremovably, through mechanical constraint means. By way of example, such mechanical means may be of the joint type. In this case, suitable coupling elements may be provided on the seal and may be housed in corresponding seats afforded on the filtering wall. According to a further aspect of the present invention, the edge of the wall comprises at least one coupling element for coupling with the seal arranged along the entire perimeter. The coupling element is L-shaped. This solution enables the coupling surface area between the edge of the filtering wall and the seal to be increased. Clearly, this enables the effectiveness of the connection through overinjection to be increased, simultaneously improving the stability over time of such connection.

According to a further aspect of the invention, the filtering wall and the seal are associated with the cup-shaped body through interference. This allows such connection to be made quickly and effectively, also exploiting the deformability of the material of which the seal is made.

According to a further aspect of the present invention, the filter further comprises a gripping member associated with the filtering wall for separating the filtering wall from the cup-shaped body. This characteristic allows the disassembly of the filter into its components to be facilitated for making cleaning operations quick and simple.

According to a further aspect of the present invention, the gripping member comprises a tongue that protrudes from the seal. This solution allows the construction of the gripping member to be enormously simplified. In fact, the tongue is made during the seal overinjection step and it is not therefore necessary to provide further and distinct components or construction steps. In alternative embodiments, the gripping member may be a distinct and separate element that can be connected by means of gluing or other mechanical means to the seal and/or the filtering wall.

In accordance with a further aspect of the present invention, a system is provided that comprises a filter for espresso coffee machines and a filter holder for assembling the filter on the machine and in which the filter is housed.

Within the scope of the present description, reference shall be made to the appended figures in which:

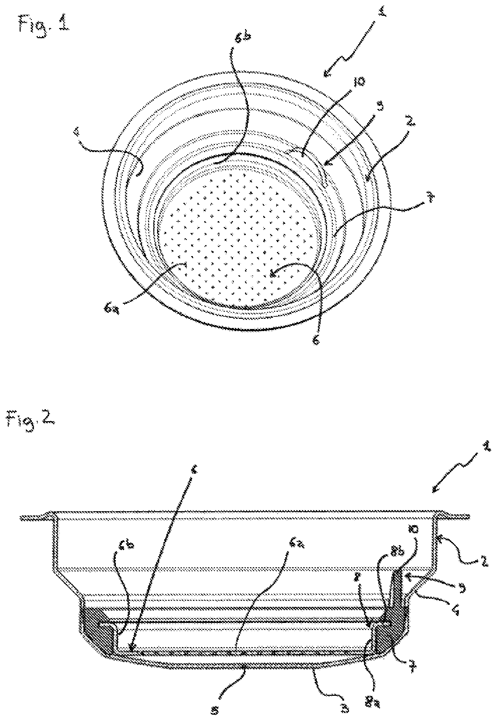

- figure 1 represents an axonometric view of a filter for coffee machines in accordance with the present invention;
- figure 2 is a sectional view of the filter for coffee machines of figure 1.

With reference to the appended figures, a filter for coffee machines in accordance with the present invention is indicated in its entirety by the number 1.

The filter 1 comprises a first portion removably associated with a second portion. In accordance with the present invention, the filter 1 comprises exactly the first and the second portion.

The first portion comprises a cup-shaped body 2 having a bottom wall 3 and a lateral wall 4 fixed to the bottom wall 3. In the cup-shaped body 2 a compartment is therefore defined for containing a predetermined dose of coffee powder.

The cup-shaped body 2 has an axisymmetric shape. The cup-shaped body 2 is made of a single piece. The cup-shaped body 2 is made of metal material. By way of example, the cup-shaped body 2 is made through moulding a single metal plate.

The cup-shaped body 2 is, in use, intended to be inserted in a filter holder of a coffee machine.

The filter holder (not shown) comprises a main body in which a compartment is defined for housing the filter containing the coffee powder in a stationary and stable way. The filter holder further comprises a handle connected to the main body, which allows the assembly of the filter holder on the espresso coffee machine for preparing the beverage.

In the bottom wall 3 of the cup-shaped body 2, an acceleration hole 5 is made in order to allow the infused beverage to exit the filter 1. As shown, the hole 5 is a through hole positioned centrally in the bottom wall 3. Purely by way of example, the hole 5 may have a diameter comprised between 0.3 mm and 0.5 mm.

It is to be observed that the first portion exclusively comprises the cup-shaped body 2 which, as mentioned above, comprises a single component.

The second portion of the filter 1 comprises a filtering wall 6, arranged within the cup-shaped body 2 and placed upstream of the hole 5.

The filtering wall 6 comprises a flat portion 6a, having a multitude of through holes through which the infused beverage passes, retaining the particles of coffee powder.

It is to be observed here that the flat shape of the portion 6a of the filtering wall is not a limiting characteristic and may be substituted by a convex or concave curved shape or any other shape.

The filtering wall 6 further comprises an edge 6b that extends perimetrally to the flat portion 6a.

The filtering wall 6 is removably associated with the cup-shaped body 2. In more detail, the filtering wall is arranged in the cup-shaped body 2 so that the edge 6b is coupled to the cup-shaped body 2. In particular, the edge 6b is preferably coupled to the lateral wall 4.

The filtering wall 6 is made of metal material.

The second portion of the filter 1 further comprises a seal 7 placed between the filtering wall 6 and the cup-shaped body 2. In more detail, the seal is placed between the edge 6b of the filtering wall 6 and the cup-shaped body 2.

Such seal 7 prevents a flow between the filtering wall 6 and the cup-shaped body 2 which would also cause the passage of coffee powder which would contaminate the beverage.

The second portion, comprising the filtering wall 6 and the seal 7, is preferably configured so as to guarantee the seal against the cup-shaped body, in particular against the internal lateral wall of the cup-shaped body, without further tightening means.

It is to be noted yet again that the present invention can be applied in the making of espresso coffee. Therefore, in the step of making the beverage, the filter 1 is crossed by a flow of hot water under pressure. The pressure of the flow of water may reach a value of 9-10 bar and the seal 7 is therefore made in such a way as to withstand such pressure.

The seal 7 is made of elastomeric material, for example, silicone rubber. In more detail, the elastomeric material is based on food grade silicone.

In accordance with the present invention, the seal 7 is associated with the edge 6b of the filtering wall 6 in a unremovable way. In other words, the filtering wall 6 and the seal 7 are made of a single piece.

The seal 7 is associated with the filtering wall 6 through the overinjection of elastomeric material at the edge 6b of the filtering wall 6. Advantageously, this allows a stable and long-lasting connection to be made between the seal 7 and the filtering wall 7 simply and without the use of further coupling means, such as glue or the like.

In order to facilitate the coupling between the seal 7 and the filtering wall 6, the edge 6b of the filtering wall 6 has a coupling element 8 that extends along the entire perimeter of the filtering wall 6. In accordance with the illustrations, the coupling element 8 is L-shaped.

In other words, the coupling element 8 comprises a cylindrical wall 8a that extends transversally to the flat portion 6a of the filtering wall 6 along its entire perimeter.

Furthermore, the coupling element 8 comprises an annular wall 8b, with a circular crown shape, which extends from the cylindrical wall 8a in an opposite position to the portion 6a of the filtering wall 6. In this way, the coupling element 8 defines an increased coupling surface area with the elastomeric material that defines the seal 7.

In fact, the coupling element 8 defines the edge 6b of the filtering wall 6.

As well as guaranteeing a fluid seal between the filtering wall 6 and the cup-shaped body 2, the seal 7 allows the reversible coupling to between the filtering wall 6 and the cup-shaped body 2 be made.

In particular, the filtering wall 6 and the seal 7 are associated with the cup-shaped body 2 by means of interference.

The elastic deformability characteristics of the seal 7 allow the aforementioned reversible coupling.

It is to be noted that the second portion of the filter 1 only comprises the filtering wall 6 and the seal 7 which are made in a single piece.

The second portion of the filter 1 may further comprise a gripping member 9 connected to the filtering wall 6 so that it may be simply gripped for removing it from the cup-shaped body 2.

The gripping member 9 comprises a tongue 10 made as a single piece with the seal 7 and protruding therefrom.

The invention thus described reaches the pre-set object.

In fact, the filter is solely made of two components associated with one another by interference, in other words the first and the second portion.

This allows the filter to be disassembled simply and quickly for being able to conveniently wash the two portions. In that way, the periodic cleaning operation necessary for keeping the functionality of the filter constant is very simple and quick both in relation to a domestic use of the filter and a professional use thereof.

## Claims

1. A filter for an espresso coffee machine comprising a first portion having a cup-shaped body (2), for containing coffee powder, having at least one bottom wall (3) having an acceleration hole (5) for the dispensing of coffee; a second portion comprising a filtering wall (6) placed in the cup-shaped body (2) upstream of the acceleration hole (5) and removably associated with the cup-shaped body (2) and a seal (7) placed between an edge (6b) of the filtering wall (6) and the cup-shaped body (2); said seal (7) being coupled unremovably to the filtering wall (6); **characterised in that** it exclusively comprises said first and said second portion.

2. The filter according to claim 1, **characterised in that** said cup-shaped body (2) is made as a single piece.

3. The filter according to claim 1 or 2, **characterised in that** the seal (7) is associated with the filtering wall (6) by overinjection with elastomeric material.

4. The filter according to any one of the preceding claims, **characterised in that** said edge (6b) of the filtering wall (6) comprises at least one coupling element (8) for coupling with the seal (7), disposed along the entire perimeter; said coupling element (8) being L-shaped.

5. The filter according to any one of the preceding claims, **characterised in that** the filtering wall (6) and the seal (7) are associated with the cup-shaped body (2) by interference.

6. The filter according to any one of the preceding claims, **characterised in that** it further comprises a gripping member (9) associated with the filtering wall (6) for separating said filtering wall (6) from said cup-shaped body (2).

7. The filter according to claim 6, **characterized in that** the gripping member (9) comprises a tongue (10) which protrudes from the seal (7).

8. A system comprising a filter for an espresso coffee machine in accordance with any one of the preceding claims and a filter holder for housing said filter.

## Patentansprüche

1. Filter für eine Espresso-Kaffeemaschine, der einen ersten Abschnitt umfasst, der einen tassenförmigen Körper (2) zum Enthalten von Kaffeepulver aufweist, der mindestens eine untere Wand (3) aufweist, die eine Beschleunigungsöffnung (5) zum Beziehen von Kaffee; einen zweiten Abschnitt, der eine Filterwand (6) umfasst, die in dem tassenförmigen Körper (2) stromaufwärts von der Beschleunigungsöffnung (5) gelegen ist und abnehmbar mit dem tassenförmigen Körper (2) verbunden ist, und eine Dichtung (7), die zwischen einem Rand (6b) der Filterwand (6) und dem tassenförmigen Körper (2) positioniert ist, aufweist; wobei die Dichtung (7) nicht abnehmbar mit der Filterwand (6) gekoppelt ist; **dadurch gekennzeichnet, dass** er ausschließlich den ersten und den zweiten Abschnitt umfasst.

2. Filter nach Anspruch 1, **dadurch gekennzeichnet, dass** der tassenförmige Körper (2) aus einem einzigen Stück hergestellt ist.

3. Filter nach Anspruch 1 oder 2, **dadurch gekennzeichnet, dass** die Dichtung (7) mit der Filterwand (6) durch Umspritzen mit Elastomermaterial verbunden ist.

4. Filter nach einem der vorstehenden Ansprüche, **dadurch gekennzeichnet, dass** der Rand (6b) der Filterwand (6) mindestens ein Kopplungselement (8) zum Koppeln mit der Dichtung (7), die entlang des gesamten Umfangs angeordnet ist, umfasst, wobei das Kopplungselement (8) L-förmig ist.

5. Filter nach einem der vorstehenden Ansprüche, **dadurch gekennzeichnet, dass** die Filterwand (6) und die Dichtung (7) mit dem tassenförmigen Körper (2) durch Interferenz verbunden sind.

6. Filter nach einem der vorstehenden Ansprüche, **dadurch gekennzeichnet, dass** er weiter ein Greifelement (9) umfasst, das mit der Filterwand (6) verbunden ist, zum Trennen der Filterwand (6) von dem tassenförmigen Körper (2).

7. Filter nach Anspruch 6, **dadurch gekennzeichnet, dass** das Greifelement (9) eine Zunge (10) umfasst, die von der Dichtung (7) vorsteht.

8. System, das einen Filter für eine Espresso-Kaffeemaschine nach einem der vorstehenden Ansprüche und einen Filterhalter zum Tragen des Filters umfasst.

## Revendications

1. Filtre pour une machine à café expresso comprenant une première partie présentant un corps en forme de godet (2), destinée à contenir de la poudre de café, présentant au moins une paroi inférieure (3) présentant un trou d'accélération (5) pour la distribution de café ; une seconde partie comprenant une paroi de filtration (6) placée dans le corps en forme de godet (2) en amont du trou d'accélération (5) et associée de manière amovible au corps en forme de godet (2), et un joint d'étanchéité (7) placé entre un bord (6b) de la paroi de filtration (6) et le corps en forme de godet (2) ; ledit joint d'étanchéité (7) étant couplé de manière non amovible à la paroi de filtration (6) ; **caractérisé en ce qu'** il comprend exclusivement ladite première et ladite seconde partie.

2. Filtre selon la revendication 1, **caractérisé en ce que** ledit corps en forme de godet (2) est réalisé d'un seul tenant.

3. Filtre selon la revendication 1 ou 2, **caractérisé en ce que** le joint d'étanchéité (7) est associé à la paroi de filtration (6) par sur-injection de matière élastomère.

4. Filtre selon l'une quelconque des revendications précédentes, **caractérisé en ce que** ledit bord (6b) de la paroi de filtration (6) comprend au moins un élément de couplage (8) pour un couplage avec le joint d'étanchéité (7), disposé sur tout le périmètre ; ledit élément de couplage (8) étant en forme de L.

5. Filtre selon l'une quelconque des revendications précédentes, **caractérisé en ce que** la paroi de filtration (6) et le joint d'étanchéité (7) sont associés au corps en forme de godet (2) par interférence.

6. Filtre selon l'une quelconque des revendications précédentes, **caractérisé en ce qu'**il comprend en outre un élément de préhension (9) associé à la paroi de filtration (6) pour séparer ladite paroi de filtration (6) dudit corps en forme de godet (2).

7. Filtre selon la revendication 6, **caractérisé en ce que** l'élément de préhension (9) comprend une languette (10) qui fait saillie à partir du joint d'étanchéité (7).

8. Système comprenant un filtre pour une machine à café expresso selon l'une quelconque des revendications précédentes et un porte-filtre pour loger ledit filtre.
